(19) Europäisches Patentamt
European Patent Office
Office européen des brevets

(11) **EP 4 071 515 A1**

(12) **EUROPEAN PATENT APPLICATION**

(43) Date of publication:
**12.10.2022 Bulletin 2022/41**

(21) Application number: **21305472.9**

(22) Date of filing: **09.04.2021**

(51) International Patent Classification (IPC):
**G01S 17/42** (2006.01)       **G01S 7/481** (2006.01)
**G01S 17/89** (2020.01)

(52) Cooperative Patent Classification (CPC):
**G01S 17/42; G01S 7/4814; G01S 7/4816;
G01S 7/4817; G01S 17/89**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Centre national de la recherche scientifique
75016 Paris (FR)**
• **Université Côte d'Azur
06103 Nice Cedex 2 (FR)**

(72) Inventors:
• **GENEVET, Patrice
06130 GRASSE (FR)**
• **JULIANO MARTINS, Renato
06600 ANTIBES (FR)**
• **KHADIR, Samira
06600 ANTIBES (FR)**
• **GIUDICI, MASSIMO
06250 MOUGINS (FR)**

(74) Representative: **Atout PI Laplace
Immeuble "Visium"
22, avenue Aristide Briand
94117 Arcueil Cedex (FR)**

(54) **SYSTEM AND METHOD FOR IMAGING IN THE OPTICAL DOMAIN**

(57)    An optical imaging system (10) comprising a transmitter unit (100) and a receiver unit (200), the transmitter unit (100) comprising:
◦ a light-emitting source (101) configured to generate at least one first optical beam at a given wavelength;
◦ a light modulator (102), associated with a first field of view (1020), configured to deflect the at least one first optical beam in a first deflection direction within the first field of view (1020) to generate a first deflected beam, by applying an external control signal ;
◦ a transmissive deflecting device (103), associated with a second field of view (1030) and comprising a two-dimensional (2D) arrangement of deflecting cells (103-i), each of the deflecting cells (103-i) being reachable by the first deflected beam and being associated with an elementary field of view (1030-i), the transmissive deflecting device (103) being configured to generate at least one second deflected beam from the first deflected beam using an operational deflecting cell (103-i) of the plurality of deflecting cells (103-i) that receives the first deflected beam;
the receiver unit (200) comprising:
◦ a light-focusing device (201) configured to focus a portion of the at least one second deflected beam received after propagation in a target environment (20) located outside the transmitter unit (100);
◦ at least one photo-detector (202) configured to convert the focused portion of the second deflected beam into an output electrical signal.

Fig. 1

**Description**

**TECHNICAL FIELD**

The invention generally relates to optical sensing and in particular to an optical imaging system and method.

**BACKGROUND**

Optical imaging systems use optical waves propagating in free space (i.e. air, outer space, vacuum, or similar medium) to image or to monitor a target environment. The use of optical waves is driven by many advantageous such as the maturity of the technologies used to generate, manipulate and detect optical waves, the almost unlimited bandwidth allowed by such waves, and the low cost necessary to deploy such technologies.

Optical imaging systems, such as LIDAR technologies, are widely deployed nowadays. Most of such systems make use of static laser sources in terms of orientation, which means that the generated optical beams are pointed, continuously or in a pulsed regime over the time, in a single pointing direction. Such features are not compatible with today's applications.

Numerous solutions have been proposed to achieve certain flexibility in the operation of such imaging systems, in particular in terms of pointing direction. Some of the proposed solutions are based on mechanically assisted devices to change the pointed direction of an optical imaging system. However, such solutions are only compatible with applications having limited scanning speed. Further, they require a large footprint and a high-power consumption.

Other known solutions rely on active optical devices to tune the pointed direction of an optical imaging system. For example, US10665953 discloses an optical imaging system relying on active optical devices where a metasurface is coupled to liquid crystals associated with resonant antennas, which makes it possible to modify the local reflection phases of the output optical beams. However, the use of liquid crystals results in a complex electronics architecture, considerable reduction of the scanning speed, and limited deflection angles. In addition, imaging systems based on active optical devices have a lot of drawbacks, such as a high power consumption and complex driver mechanism.

There is accordingly a need for an improved optical imaging system and method.

**SUMMARY**

In order to address these and other problems, there is provided an optical imaging system comprising a transmitter unit and a receiver unit. The transmitter unit comprises:

- a light-emitting source configured to generate at least one first optical beam at a given wavelength;
- a light modulator, associated with a first field of view, configured to deflect the at least one first optical beam in a first deflection direction within the first field of view to generate a first deflected beam, by applying an external control signal;
- a transmissive deflecting device, associated with a second field of view and comprising a two-dimensional (2D) arrangement of deflecting cells, each of the deflecting cells being reachable by the first deflected beam and being associated with an elementary field of view, the transmissive deflecting device being configured to generate at least one second deflected beam from the first deflected beam using an operational deflecting cell of the plurality of deflecting cells that receives the first deflected beam.

The receiver unit comprises:

- a light-focusing device configured to focus a portion of the at least one second deflected beam received after propagation in a target environment located outside the transmitter unit;
- at least one photo-detector configured to convert the focused portion of the second deflected beam into an output electrical signal.

According to some embodiments, the optical imaging system may further comprise a control unit configured to select the operational deflecting cell by generating a corresponding external control signal.

According to some embodiments, the control unit may further be configured to change, at least once during a scanning period, the operational deflecting cell.

According to some embodiments, the second field of view may be wider than the first field of view.

According to some embodiments, the second field of view may be comprised between 120 degrees and 180 degrees, when measured horizontally, and/or vertically.

According to some embodiments, the light-emitting source may further be configured to modulate the at least one first optical beam using a modulating signal supplied by the control unit.

According to some embodiments, the at least one first optical beam may be intensity-modulated.

According to some embodiments, the at least one first optical beam may be frequency-modulated.

According to some embodiments, the optical imaging system may further comprise an optical filter arranged between the spatial light modulator and the transmissive deflecting device to eliminate undesired optical beams.

According to some embodiments, the optical imaging system may further comprise a processing unit configured receive the output electrical signal, and to determine a plurality of characteristics of the target environment, the plurality of characteristics including geometric characteristics.

According to some embodiments, the transmissive deflecting device may comprise one or more of the elements among a diffraction grating, a blazed grating, a blazed binary sub-wavelength grating, and/or a metasurface.

According to some embodiments, the spatial light modulator may comprise a horizontally oriented acousto-optic deflector and a vertically oriented acousto-optic deflector.

According to some embodiments, the light-focusing device is a converging lens, preferably a passive scanning lens.

According to some embodiments, the transmissive deflecting device may be a passive transmissive deflecting device.

There is also provided an imaging method, the method comprising the steps of:

◦ generating at least one first optical beam, by means of a light-emitting device;
◦ deflecting, by means of a spatial light modulator, the at least one first optical beam in a first deflection direction within a first field of view to generate a first deflected beam, by applying an external control signal on the spatial light modulator;
◦ generating, by means of a transmissive deflecting device comprising a two-dimensional (2D) arrangement of deflecting cells, at least one second deflected beam from the first deflected beam within a second field of view, the second field of view being wider than the first field of view.

According to some embodiments, the imaging method may further comprise the steps:

◦ focusing a portion of the at least one second deflected beam received after propagation in a target environment;
◦ converting the focused portion of the at least one second deflected beam into an output electrical signal;
◦ determining a plurality of characteristics of the target environment, the plurality of characteristics including geometric characteristics.

## BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.

Figure 1 represents a schematic diagram of an optical imaging system, according to some embodiments of the invention;
Figure 2 illustrates the field of view of a spatial light modulator, according to some embodiments of the invention;
Figure 3 illustrates the field of view of a transmissive deflecting device, according to some embodiments of the invention;
Figure 4 represents an exemplary transmissive deflecting device, according to some embodiments of the invention;
Figure 5 represents another exemplary transmissive deflecting device, according to some embodiments of the invention;
Figure 6 is a flowchart illustrating a method for optical imaging, according to some embodiments of the invention; and
Figure 7 represents the performance of the optical imaging system in a real-world environment.

## DETAILED DESCRIPTION

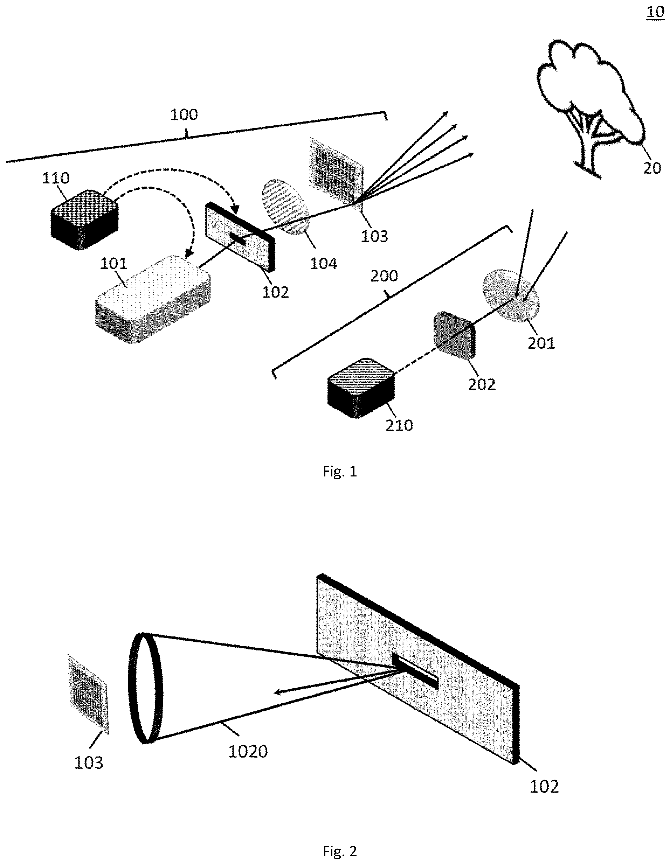

Figure 1 represents an optical imaging system 10 enabling the characterization of a target environment 20 by making use of optical beams, according to some embodiments of the invention. The characterization of a target environment 20 according to the embodiments of the invention relies on the use of flexible optical beams in terms of pointed direction.

The invention may be implemented in any system that uses light to interact with or to monitor a two-dimensional or three-dimensional target environment 20 that cannot easily be covered using a static camera. In an exemplary application of the invention, the imaging system 10 may be employed as a LIDAR (acronym for "Light Detection And Ranging") system to make high-resolution depth maps, in various fields, for example and without limitation, geology, forestry, archaeology, and land mapping. The imaging system may also be deployed in autonomous vehicles to provide real-time information about the surrounding environment 20 of the vehicle. In such application, the imaging system may replace a large number of cameras whose characteristics in terms of orientation and in terms of operational wavelength are generally static over the time and that cannot effectively cope with weather conditions and/or with the failure of one of them. The imaging system may also be used in robotics for the perception of the surrounding environment 20 and for the classification of identified objects.

Advantageously, the embodiments of the invention provide a compact and reconfigurable optical imaging system 10 with a small footprint and reduced power consumption. Such features of the optical imaging system 10 are compatible with numerous terrestrial, airborne, and mobile applications, including astronomy and spaceflight, e.g. satellites.

As shown in figure 1, the optical imaging system 10 according to the embodiments of the invention comprises a transmitter unit 100 configured to transmit optical beams toward a target environment 20 that may comprise a plurality of target objects. Various optical phenomena may occur when an optical beam interacts with the matter of a given target object. Such phenomena include scattering, reflection, absorption, refraction and diffraction of light. Some of these phenomena cause the return of a portion of the transmitted optical beam to the imaging system after a certain delay. The returned portion of the transmitted optical beam may have different properties in terms of intensity, wavelength, phase, and/or polarization with respect to the originally transmitted optical beam. The optical imaging system 10 further comprises a receiver unit 200 configured to receive and to process the returned portion of the transmitted optical beams. Advantageously, the transmitter unit 100 and the receiver unit 200 may be arranged such that an optical beam transmitted by the transmitter unit 100 cannot directly reach the receiver unit 200. For example, the transmitter unit 100 and the receiver unit 200 may be arranged close to each other in a parallel way, as illustrated in figure 1.

More specifically, with reference to figure 1, the transmitter unit 100 of the optical imaging system 10 comprises a light-emitting source 101 configured to generate a first optical beam at a given wavelength. The first optical beam may be coupled into an optical fiber or may be configured to propagate in free space in a predefined direction. The light-emitting source 101 may be configured to operate in a continuous mode in which the characteristics to the optical field representing the first optical beam remain constant over the time. These characteristics of the optical field may include the intensity, the central wavelength and/or the state of polarization.

According to some embodiments, the light-emitting source 101 may be configured to operate in a pulsed mode in which the light-emitting source 101 is alternatively turned on and off, steadily or irregularly over the time. When turned on, the light-emitting source 101 may be configured to operate in the same manner as in a continuous mode, as previously described. The use of a pulsed mode makes it easy to determine the position of a target object by measuring the time delay taken by an optical beam to return to the receiver unit 200.

According to some embodiments, the light-emitting source 101 is further configured to modulate the first optical beam using a modulating signal which may be electrical or optical. For example, either the intensity or the frequency of the optical field representing the first optical field may be modulated. Alternatively, both the intensity and the frequency of the optical may be simultaneously modulated.

According to some embodiments, the light-emitting source 101 may be configured to operate in the ultraviolet, visible, or infrared region of the electromagnetic spectrum, the infrared radiation comprising the following three bands: Near-infrared, Mid-infrared and Far-infrared. Advantageously, the central wavelength of the optical field representing the first optical beam may be chosen depending on the light absorption properties of the target objects of the target environment 20, and by taking into consideration the outdoor conditions occurring outside the optical imaging system 10, such as the weather conditions. In particular, the central wavelength may be chosen far enough from the wavelength absorption band of the target objects of the target environment 20.

In an exemplary embodiment, the light-emitting source 101 may be configured to operate in the mid-infrared region of the electromagnetic spectrum (3 to 50 $\mu$m). Although the invention is not limited to such embodiment, it should be noted that the invention has particular advantages when the light-emitting source 101 operates in the mid-infrared region of the electromagnetic spectrum, due to the high transparency of the atmosphere at such wavelengths.

As shown in figure 1, the transmitter unit 100 of the optical imaging system 10 further comprises a spatial light modulator 102 configured to receive the first optical beam through its optical input. The spatial light modulator 102 presents at its optical output a first field of view 1020 that delimits the volume of space that may be crossed by optical beams coming from the spatial light modulator 102. Figure 2 depicts an illustrative example of a first field of view 1020 that has the shape of a cone. More generally, the first field of view 1020 may be measured horizontally, vertically, or diagonally with respect to a reference direction. The spatial light modulator 102 is further configured to deflect the first optical beam as received from the light-emitting source 101 in a first deflection direction within the first field of view 1020, thus generating a first deflected beam.

In one embodiment, the spatial light modulator 102 may be an active spatial light modulator 102 including a modulation input from which a modulating signal may be applied to the spatial light modulator 102 in order to change its behavior in terms of deflection direction. The modulating signal may be an electrical modulating signal. For example, a mapping between the modulating signals and the directions of deflection operated by the spatial light modulator 102 may be previously established through a calibration process.

The spatial light modulator 102 may be configured to change the first deflection direction based on the applied modulating signals, several times during a scanning period. A first deflection direction may be chosen on the basis of the previous first deflection directions, or may be independently selected.

According to some embodiments, the first field of view 1020 of the spatial light modulator 102 may be comprised between a lower threshold, for example 10 degrees, and a higher threshold, for example 60 degrees, when measured horizontally, and/or vertically.

In one embodiment, the spatial light modulator 102 may comprise two acousto-optic modulators, also called acousto-optic deflectors, arranged in series and oriented perpendicularly to each other, each of the two acousto-optic modulators being configured to deflect the optical beam at its optical input according to its own modulating signal. In such configuration, the first optical beam is first deflected by the first acousto-optic modulator according to a first angle of view defined horizontally, for example, in the first field of view 1020. After being horizontally deflected, the first optical beam enters the second acousto-optic modulator to be vertically deflected according to a second angle of view defined perpendicularly with respect of that of the first acousto-optic modulator. In this case, the first deflection direction of the first deflected optical beam is defined by the two perpendicular angles of view.

In another embodiment, each acousto-optic modulator is configured to diffract an incident optical beam into a plurality of deflected beams. Each of the deflected optical beams is associated with an order of diffraction and exhibits a given level of power. While the optical deflected beam exhibiting the maximum level of power is a beam of interest and defines the first deflected beam, all the other deflected optical beams correspond to undesired optical beams. Advantageously, some of the undesired optical beams, for example those exhibiting a high level of power, may be used to conduct additional measurements, similarly to the first deflected beam.

The optical imaging system 10 further comprises a deflecting device 103 that may be arranged in front of the spatial light modulator 102 so that the deflecting device 103 is totally or partially contained in the first field of view 1020, as shown in figure 2. The deflecting device 103 comprises a two-dimensional (2D) arrangement of deflecting cells 103-i. Such an arrangement of the deflecting cells 103-i may either be regular or irregular. Each of the deflecting cells 103-i may be reachable by the first deflected beam and may be associated with an elementary field of view 1030-i. Similarly to the spatial light modulator 102, the deflecting device 103 presents at its optical output a second field of view 1030 that delimits the volume of space which may be crossed by optical beams coming from the deflecting device 103, i.e. coming from deflecting cells 103-i. The second field of view 1030 of the deflecting device 103 may be seen as a summation of the elementary fields of view of the deflecting cells 103-i. Further, the deflecting device 103 may be configured to generate, from the first deflected beam received from the spatial light modulator 102, at least one second deflected beam using an operational deflecting cell 103-i belonging to the 2D arrangement of deflecting cells 103-i, the operational deflecting cell 103-i being defined as the deflecting cell 103-i that receives the first deflected beam from the spatial light modulator 102.

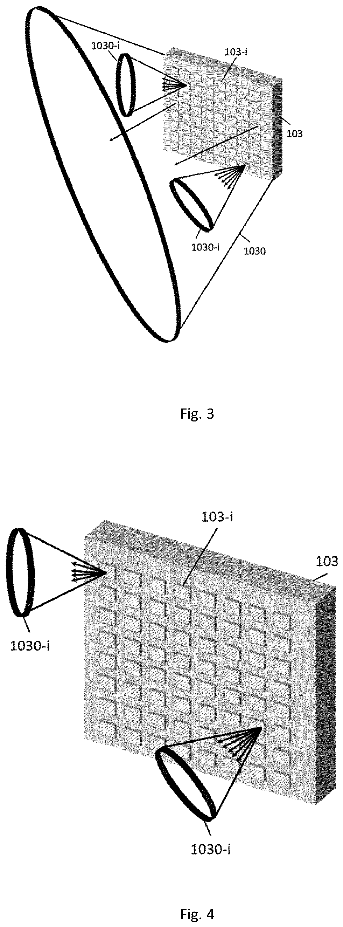

Figure 3 illustrates the operation of the deflecting device 103, according to some embodiments of the invention. In such embodiments, each of the deflecting cells 103-i may be characterized by an elementary field of view 1030-i and by a number of second deflected beams generated within the corresponding elementary field of view 1030-i, in response to the reception of a first deflected beam from the spatial light modulator 102. For example, the size of the elementary field of view 1030-i and the number of the generated second deflected beams may vary from one deflecting cell 103-i to another.

In one embodiment, the deflecting device 103 may be a passive deflecting device, which means that no power supply is required. In addition, the response of each of the deflecting cells 103-i is constant over the time and cannot be adjusted after the fabrication process. Alternatively, the deflecting device 103 may be an active deflecting device which requires a power supply and allows the response of the deflecting cells 103-i to be adjusted.

In another embodiment, the deflecting device 103 may be a transmissive deflecting device 103, as opposed to a reflective deflecting device 103. The transmissive deflecting device 103 allows the first optical beams and the second optical beams to propagate in two different regions of space, which avoids interactions between them, the two different regions of space being separated by the transmissive deflecting device 103.

According to some embodiments, the second field of view 1030 of the deflecting device 103 may be chosen so as to be significantly wider than the first field of view 1020 of the spatial light modulator 102. For example, the second field of view 1030 may be set to be greater than twice the first field of view 1020.

In an exemplary embodiment, the deflecting device 103 may be configured such that its second field of view 1030 presents the shape of a cone, which means that any two angles of view measured perpendicularly within the second field of view 1030 are slightly equal. Alternatively, the deflecting device 103 may be configured such that its second field of view 1030 presents an asymmetrical shape.

In some embodiments, the transmitter unit 100 of the optical imaging system 10 may further comprises an optical lens arranged between the spatial light modulator 102 and the passive deflecting device 103. The optical lens may be a converging optical lens and may be configured to precisely focus the first deflected beam so that it is received by a single deflecting cell, thereby enhancing the quality of the second deflected beams generated by the deflecting device 103. Alternatively, the optical lens may be a diverging optical lens and may be configured to broaden the first field of view 1020, thus reducing the required distance between the spatial light modulator 102 and the deflecting device 103 so that the latter is totally contained in the first field of view 1020.

According to some embodiments, the light-emitting source 101, the spatial light modulator 102 and the deflecting device 103 may be arranged in an aligned manner along a common propagation axis. Such an alignment obviates the need for additional optical components and provides a compact transmitter unit 100. Alternatively, the elements of the transmitter unit 100 may be arranged according to different propagation axes. In such configuration, additional optical components such as mirrors may be inserted between two adjacent elements of the transmitter unit 100 to ensure the arrival of an optical beam from the optical output of one element to the optical input of the other element.

The optical imaging system 10 further comprises a control unit 110 configured to select the operational deflecting cell 103-i among the 2D arrangement of deflecting cells 103-i of the deflecting device 103, the operational deflecting cell 103-i being defined as the deflecting cell 103-i that receives the first deflected beam. In this regard, the control unit 110 may be configured to generate a control signal and to apply the generated control signal on the spatial light modulator 102 so that the first deflected beam reaches the selected deflecting cell.

In one embodiment, the control unit 110 may be further configured to control the operation of the light-emitting source 101. Such control operation may include determining the operation mode of the light-emitting source 101, determining whether the optical field that represents the first optical beam is modulated or not, and determining, in the case of a modulated optical field, the type of the modulation, the modulation index, as well as the modulating signal.

According to some embodiments, the transmitter unit 100 may further comprise an optical filter 104, such as a spatial beam blocker, arranged between the spatial light modulator 102 and the deflecting device 103 so as to eliminate undesired optical beams. Such undesired optical beams may comprise all the optical beams generated by the spatial light modulator 102 other than the first deflected beam. Although not limited to such embodiment, the use of such an optical filter 104 has particular advantages when the spatial light modulator 102 comprises one or two acousto-optic modulators.

Figure 4 shows an exemplary transmissive deflecting device 103, according to some embodiments. The transmissive deflecting device 103 comprises a regular two-dimensional arrangement of deflecting cells 103-i which has the shape of a 2D matrix arranged in rows and columns, each of the deflecting cells 103-i occupying a given item of the 2D matrix. Each of the deflecting cells 103-i is further associated to a corresponding elementary field of view 1030-i that may be characterized by a horizontal angle and a vertical angle measured respectively along the rows and the columns of the 2D matrix. For example, the deflecting cells 103-i of a given row of the 2D matrix may be configured so that their corresponding elementary fields of view have the same horizontal angle, while the vertical angle of the corresponding elementary fields of view increases according to a given curve over the deflecting cells 103-i of the considered row. Similarly, the deflecting cells 103-i of a given column of the 2D matrix may be configured so that their corresponding elementary fields of view have the same vertical angle, while the horizontal angle of the corresponding elementary fields of view increases according to a given curve over the deflecting cells 103-i of the considered column.

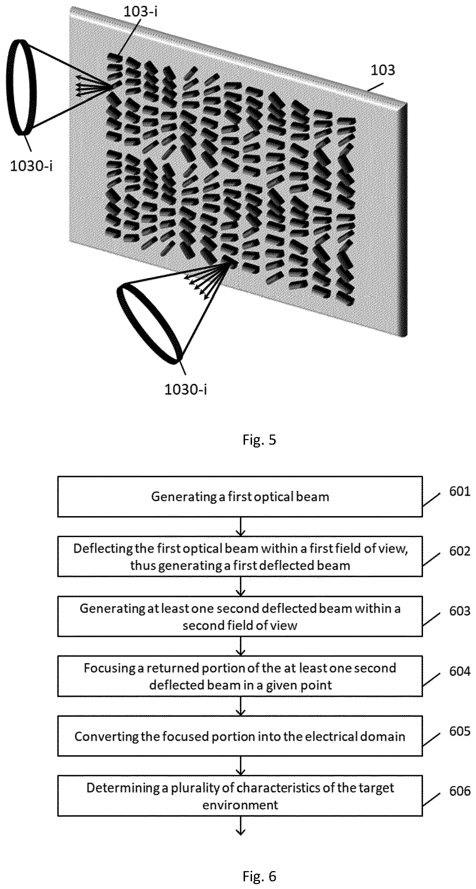

Figure 5 shows another exemplary transmissive deflecting device 103, according to some embodiments. The transmissive deflecting device 103 comprises an irregular two-dimensional arrangement of deflecting cells 103-i. Further, each of the deflecting cells 103-i may be associated with a corresponding elementary field of view 1030-i chosen independently from the elementary fields of view of the adjacent deflecting cells 103-i.

In one embodiment, the transmissive deflecting device 103 may be a diffraction grating, a blazed grating, a blazed binary sub-wavelength grating, or an optical metasurface device comprising a plurality of pixels, each of the pixels being assimilated to a deflecting cell 103-i that corresponds to a corresponding elementary field of view 1030-i.

In another embodiment, the second field of view 1030 of the deflecting device 103 may be comprised between 120 degrees and 180 degrees, when it is measured horizontally, and/or vertically, as illustrated in connection with figure 4.

Turning back to figure 1, the receiver unit 200 of the optical imaging system 10 may comprise a light-focusing device 201 arranged so that it does not receive the second deflected beams directly generated by the transmitter unit 100. For example, as depicted in figure 1, the light-focusing device 201 may be arranged along a propagation axis which is parallel to the central axis of the deflecting device 103 of the transmitter unit 100. The light-focusing device 201 may be configured to focus on a given point all the optical beams reaching its optical input. Among all the optical beams reaching the light-focusing device 201, there are portions of the second deflected beams returned after propagation in a target environment 20.

According to some embodiments, the light-focusing device 201 may be fixed relatively to the receiver unit 200. In addition, the light-focusing device 201 may be a passive device that does not require a power supply. For example, the light-focusing device 201 may be a converging optical lens operating in the same wavelength window as the light-emitting source 101.

The receiver unit 200 further comprises at least one photo-detector 202 configured to receive the focused optical beams and to convert them to the electrical domain through an optical to electrical conversion. When it is a returned portion of a second deflected beam that is converted by the photo-detector(s) 202 to the electrical domain, the obtained signal is referred to as output electrical signal. The other signals are referred to as noise signals.

In an exemplary embodiment, an optical filter may be arranged at the optical input of the photo-detector(s) 202 or at the input of the light-focusing device 201 to eliminate the undesired optical beams that generate the noise signals. The elimination of such undesired optical beams may also be achieved by inserting an electrical filter at the electrical output of the photo-detector(s) 202.

In one embodiment, the receiver unit 200 may comprise a single photo-detector 202. In such embodiment, the electrical output signal is a real-valued signal, which represents only the intensity of the corresponding optical beam.

In another embodiment the receiver unit 200 may comprise at least two photodetectors 202 and a local oscillator which are configured so as to allow an optical heterodyne detection of the optical beams. In such embodiment, the electrical output signal is a complex-valued signal, which represents both the intensity and the phase of the corresponding optical beams. Advantageously, the light-emitting source 101 may be used as a local oscillator to realize a heterodyne detection. The use of a heterodyne detection in conjunction with frequency-modulated beams allows for example detecting both the position and the velocity of the target objects of the target environment 20.

According to some embodiments, the optical imaging system 10 may further comprise a processing unit 210 configured to receive and to process the output electrical signals in conjunction with the characteristics of the second deflected beams as provided by the control unit 110. The processing unit 210 is further configured to detect target objects in the target environment 20 and to determine a plurality of characteristics of the detected target objects. The characteristics of a detected target object may include geometric characteristics such as the shape and/or the size of the object, as well as other characteristics that may include the position and the instantaneous velocity.

Advantageously, some of the characteristics of the target objects may be determined by the processing unit 210 by making use of equation (1) that rules the transmission and the reception of optical beams by means of the optical imaging system 10.

$$N_{LiDAR} \ = \ N_{laser} \cdot [\beta \cdot \frac{A}{R^2} \cdot T_f\,(R) \cdot T_b\,(R) \cdot \eta] + N_b \qquad (1)$$

In equation (1), $N_{laser}$ represents the number of transmitted photons, $\beta$ represents an angular scattering probability, $\frac{A}{R^2}$ represents a solid angle for the collection probability, T represents light transmission in medium, $\eta$ represents system efficiency including the optical losses and the laser/Field of View overlap, and $N_b$ represents the background noise.

According to some embodiments, the control unit 110 may be configured to maintain constant over the time the characteristics of the optical field representing the first optical beam when changing the operational deflecting cell. Alternatively, the control unit 110 may be configured to change at least one characteristic of the optical field that represents the first optical beam when changing the operational deflecting cell. The changed characteristic of the optical field may be the intensity, the central wavelength, the state of polarization, and/or the optical phase.

According to some embodiments, the control unit 110 may further be configured to change at least once during a scanning period the operational deflecting cell. For example, the control unit 110 may be configured to use a plurality of operational deflecting cells 103-i during the scanning period according to a switching speed that can be greater than 10 Megahertz. The switching speed required to change the operational deflecting cell 103-i may be limited by the bandwidth of spatial light modulator 102.

In an exemplary embodiment, the transmitter unit 100 of the optical imaging system 10 may comprise at least two light-emitting sources 101, each of the light-emitting sources 101 being configured to generate a first optical beam at a different or at the same wavelength. In such embodiment, the spatial light modulator 102 may be configured to deflect the first optical beams either according to a same first deflection direction or according to different first deflection directions, thus generating a plurality of first deflected beams that could be used to impinge different deflecting cells (103-i). Alternatively, a single light-emitting source 101 may be used to generate the plurality of first optical beams.

Figure 6 is a flowchart depicting the optical imaging method for imaging a target environment 20. The target environment 20 may comprise a plurality of target objects.

At step 601, a first optical beam at a given wavelength may be generated by means of a light-emitting source 101. The characteristics of the optical field which represents the first optical beam may remain constant or may vary over the time.

At step 602, the first optical beam may be deflected, by means of a spatial light modulator 102, in a first deflection direction within a first field of view 1020 to generate a first deflected beam. The first deflection direction may be determined by applying an external control signal on the spatial light modulator.

At step 603, the first deflected beam may be received by a transmissive deflecting device 103 that comprises a two-dimensional (2D) arrangement of deflecting cells 103-i. Further, at least one second deflected beam may be generated from the first deflected beam using the operational deflecting cell 103-i that receives the first deflected beam. The at least one second deflected beam may be generated according to a second field of view 1030 associated to the transmissive deflecting device 103, the second field of view 1030 being wider with respect to the first field of view 1020.

At step 604, a returned portion of the at least one second deflected beam may be received after propagation in the target environment 20 and may be focused in a given point.

At step 605, the focused portion of the at least one second deflected beam may be converted into the electrical domain through an optical to electrical conversion that may be conducted using at least one photo-detector 202, thus generating an output electrical signal.

At step 606, a plurality of characteristics of the target environment 20 may be determined from the output electrical signal. Advantageously, at step 606, a two-dimensional or a three-dimensional mapping of the target environment 20 may be determined by scanning a significant number of deflecting cells 103-i.

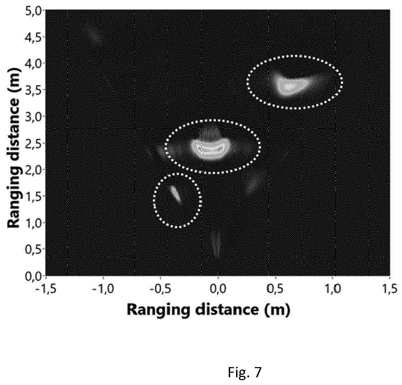

Figure 7 illustrates the performance of the optical imaging system 10 in a real-world environment 20 that comprises three target objects exhibiting different shapes and located at different positions. The mapping conducted using the optical imaging system 10 according to the embodiments of the invention allows clearly distinguishing the position and the shape of each of the three target objects.

It should be noted that the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

While embodiments of the invention have been illustrated by a description of various examples, and while these embodiments have been described in considerable detail, it is not the intent of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described.

**Claims**

1. An optical imaging system (10) comprising a transmitter unit (100) and a receiver unit (200), wherein said transmitter unit (100) comprises:

   ○ a light-emitting source (101) configured to generate at least one first optical beam at a given wavelength;
   ○ a light modulator (102), associated with a first field of view (1020), configured to deflect said at least one first optical beam in a first deflection direction within said first field of view (1020) to generate a first deflected beam, by applying an external control signal;
   ○ a transmissive deflecting device (103), associated with a second field of view (1030) and comprising a two-dimensional (2D) arrangement of deflecting cells (103-i), each of said deflecting cells (103-i) being reachable by said first deflected beam and being associated with an elementary field of view (1030-i), said transmissive deflecting device (103) being configured to generate at least one second deflected beam from said first deflected beam using an operational deflecting cell (103-i) of said plurality of deflecting cells (103-i) that receives said first deflected beam;

   and wherein said receiver unit (200) comprises:

   ○ a light-focusing device (201) configured to focus a portion of said at least one second deflected beam received after propagation in a target environment (20) located outside said transmitter unit (100);
   ○ at least one photo-detector (202) configured to convert the focused portion of the second deflected beam into an output electrical signal.

2. The optical imaging system (10) of claim 1, wherein it further comprises a control unit (110) configured to select the operational deflecting cell (103-i) by generating a corresponding external control signal.

3. The optical imaging system (10) of claim 2, wherein the control unit (110) is further configured to change, at least once during a scanning period, the operational deflecting cell (103-i).

4. The optical imaging system (10) of claim 1, wherein the second field of view (1030) is wider than the first field of view (1020).

5. The optical imaging system (10) of claim 1, wherein the second field of view (1030) is comprised between 120 degrees and 180 degrees, when measured horizontally, and/or vertically.

6. The optical imaging system (10) of claim 1, wherein the light-emitting source (101) is further configured to modulate the at least one first optical beam using a modulating signal supplied by the control unit (110).

7. The optical imaging system (10) of claim 6, wherein the at least one first optical beam is intensity-modulated.

8. The optical imaging system (10) of claim 6, wherein the at least one first optical beam is frequency-modulated.

9. The optical imaging system (10) of claim 1, wherein it further comprises an optical filter (104) arranged between the spatial light modulator (102) and the transmissive deflecting device (103) to eliminate undesired optical beams.

10. The optical imaging system (10) of claim 1, wherein it further comprises a processing unit (210) configured receive said output electrical signal, and to determine a plurality of characteristics of the target environment (20), the plurality of characteristics including geometric characteristics.

11. The optical imaging system (10) of claim 1, wherein the transmissive deflecting device (103) comprises one or more of the elements among a diffraction grating, a blazed grating, a blazed binary sub-wavelength grating, and/or a metasurface.

12. The optical imaging system (10) of claim 1, wherein the spatial light modulator (102) comprises a horizontally oriented acousto-optic deflector and a vertically oriented acousto-optic deflector.

13. The optical imaging system (10) of claim 1, wherein the light-focusing device (210) is a converging lens, preferably a passive scanning lens.

14. The optical imaging system (10) of claim 1, wherein the transmissive deflecting device (103) is a passive transmissive deflecting device.

15. An imaging method comprising the steps of:

  ◦ generating (601) at least one first optical beam, by means of a light-emitting device (101);
  ◦ deflecting (602), by means of a spatial light modulator (102), the at least one first optical beam in a first deflection direction within a first field of view (1020) to generate a first deflected beam, by applying an external control signal on the spatial light modulator (102);
  ◦ generating (603), by means of a transmissive deflecting device (103) comprising a two-dimensional (2D) arrangement of deflecting cells (103-i), at least one second deflected beam from the first deflected beam within a second field of view (1030), the second field of view (1030) being wider than the first field of view (1020).

16. The imaging method of claim 15, wherein it further comprises:

  ◦ focusing (604) a portion of the at least one second deflected beam received after propagation in a target environment (20);
  ◦ converting (605) the focused portion of the at least one second deflected beam into an output electrical signal;
  ◦ determining (606) a plurality of characteristics of the target environment (20), the plurality of characteristics including geometric characteristics.

10

100

110

101

102

103

104

200

201

202

210

20

Fig. 1

103

1020

102

Fig. 2

Fig. 3

Fig. 4

Fig. 5

| | |
|---|---|
| Generating a first optical beam | 601 |
| Deflecting the first optical beam within a first field of view, thus generating a first deflected beam | 602 |
| Generating at least one second deflected beam within a second field of view | 603 |
| Focusing a returned portion of the at least one second deflected beam in a given point | 604 |
| Converting the focused portion into the electrical domain | 605 |
| Determining a plurality of characteristics of the target environment | 606 |

Fig. 6

Fig. 7

Europäisches
Patentamt

European
Patent Office

Office européen
des brevets

## EUROPEAN SEARCH REPORT

Application Number

EP 21 30 5472

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/319344 A1 (RONCHINI XIMENES AUGUSTO [US] ET AL) 8 October 2020 (2020-10-08) * paragraphs [0003], [0052], [0062] - [0068], [0079]; figures 3, 4, 8 * ----- | 1-16 | INV. G01S17/42 G01S7/481 G01S17/89 |
| A | US 2020/387043 A1 (BLANCHE PIERRE ALEXANDRE [US]) 10 December 2020 (2020-12-10) * paragraphs [0013], [0039] - [0053]; figures 2, 5 * ----- | 1-16 | |
| A | MCMANAMON P F ET AL: "OPTICAL PHASED ARRAY TECHNOLOGY", PROCEEDINGS OF THE IEEE, IEEE. NEW YORK, US, vol. 84, no. 2, 1 February 1996 (1996-02-01), pages 268-298, XP000555865, ISSN: 0018-9219, DOI: 10.1109/5.482231 * page 280 - page 281; figure 13 * ----- | 1-16 | |

| | |
|---|---|
| | TECHNICAL FIELDS SEARCHED (IPC) |
| | G01S |

The present search report has been drawn up for all claims

| Place of search | Date of completion of the search | Examiner |
|---|---|---|
| Munich | 16 September 2021 | Beer, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 30 5472

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2021

| Patent document cited in search report | | Publication date | Patent family member(s) | | Publication date |
|---|---|---|---|---|---|
| US 2020319344 | A1 | 08-10-2020 | NONE | | |
| US 2020387043 | A1 | 10-12-2020 | US | 2020387043 A1 | 10-12-2020 |
| | | | WO | 2019168779 A1 | 06-09-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 10665953 B